# Europäisches Patentamt

## European Patent Office

## Office européen des brevets

(19)

(11) Veröffentlichungsnummer: **0 141 198**
**B1**

(12) # EUROPÄISCHE PATENTSCHRIFT

(45) Veröffentlichungstag der Patentschrift:
**10.12.86**

(51) Int. Cl.⁴: **F 27 B 1/08, C 04 B 2/12**

(21) Anmeldenummer: **84110974.7**

(22) Anmeldetag: **14.09.84**

(54) Verfahren zum Brennen von karbonatischem Rohstein in einem Schachtofen.

(30) Priorität: **15.09.83 DE 3333341**

(43) Veröffentlichungstag der Anmeldung:
**15.05.85 Patentblatt 85/20**

(45) Bekanntmachung des Hinweises auf die Patenterteilung:
**10.12.86 Patentblatt 86/50**

(84) Benannte Vertragsstaaten:
**BE DE FR GB IT**

(56) Entgegenhaltungen:
**DE - A - 2 050 051**
**DE - B - 2 052 029**
**DE - B - 2 403 347**
**US - A - 3 887 326**

**ZEMENT-KALK-GIPS, Band 27, Nr. 10, 1974, Seiten 513-517, Wiesbaden, DE; G. KÖHN: "Ein neues Brennverfahren zum peripheren Beheizen von Kalkschachtöfen mit gasförmigen oder vergasbaren Brennstoffen"**

(73) Patentinhaber: **Rheinische Kalksteinwerke GmbH., Wilhelmstrasse 77, D-5603 Wülfrath (DE)**

(72) Erfinder: **Zepter, Karl-Heinz, Dipl.-Berging, Kleingoldberg 31, D-4020 Mettmann (DE)**
Erfinder: **Thiel, Leonhard, In den Brodwiesen 77, D-3538 Marsberg (DE)**
Erfinder: **Götte, Franz-Josef, Brilonerstrasse 30, D-5790 Brilon-Messinghausen (DE)**
Erfinder: **Opitz, Dieter, Dr. Dipl.-Ing., Everskamp 40, D-4035 Breitscheid (DE)**
Erfinder: **Roeder, Alfred, Dr., Falkstrasse 112, D-4100 Duisburg 1 (DE)**

## Beschreibung

Die vorliegende Erfindung betrifft ein Verfahren zum Brennen von karbonatischem Rohstein in einem Schachtofen mit Gas oder Öl als Brennstoff und peripher angeordneten, über den Umfang des Ofens gleichmässig verteilten Brennern, welchen der gesamte erforderliche Brennstoff und die Hauptmenge der Verbrennungsluft zugeführt werden und wobei die Brenner sektorenweise in Gruppen zusammengefasst und die Brennergruppen einzeln steuerbar sind.

Gas- oder ölbefeuerte Schachtöfen werden konstruktiv und funktionell in Vorwärmzone, Brennzone und Kühlzone unterteilt. Die Befeuerung der Brennzone kann konstruktiv in der verschiedensten Weise ausgeführt werden, beispielsweise durch Lanzen, welche vom Ofenkopf her bis in die Brennzone reichen oder durch peripher angeordnete Brenner. Eine solche Anordnung ist beispielsweise in der DE-PS 24 03 347 beschrieben. Die zur Verbrennung des Brennstoffs erforderliche Luft wird zum Teil direkt den Brennern zugeführt, zum Teil durch die im Schacht aufsteigende Kühlluft bereitgestellt. Kühlluft ist erforderlich, um das Brenngut von Prozesstemperatur auf etwa 100°C Austragstemperatur abzukühlen. Für einen wirtschaftlichen Ofenbetrieb sind die Kühlluftmengen und die den Brennern zugeführten Luftmengen so aufeinander abzustimmen, dass sich ein Luftaktor von $\lambda$ 1,1 bis 1,2 ergibt. Einerseits muss also genügend Kühlluft zugeführt werden, um das Brenngut auf Ausgangstemperatur zu bringen, andererseits benötigen die Brenner eine gewisse Mindestluftmenge, damit das Brenngut über den Ofenquerschnitt möglichst gleichmässig erhitzt wird.

Beim Betrieb von Schachtöfen mit peripher angeordneten Brennern hat sich jedoch gezeigt, dass die aufsteigende Kühlluft dazu neigt, im Ofenzentrum aufzusteigen, wohin sie auch durch die radial einströmenden Verbrennungsgase der Brenner abgedrängt wird. In diesem Bereich befindliches Brenngut wird daher weniger mit Wärme beaufschlagt als das Brenngut in den Randpartien des Ofens. Man beobachtet infolgedessen in diesem Bereich erhöhte Mengen von Schwachbrand mit Karbonatgehalten von bis zu 20%, welche die Durchschnittswerte des ofenfallenden Gutes auf Rest-$CO_2$-Gehalte von bis zu fünf % ansteigen lassen. Hohe Rest-$CO_2$-Gehalte vermindern jedoch die Qualität des Brenngutes und sind daher unerwünscht.

Es bestand daher die Aufgabe, beim Brennen von karbonatischem Rohstein in Schachtöfen der eingangs geschilderten Art den Rest-$CO_2$-Gehalt zu vermindern unter Einhaltung einer wirtschaftlichen Betriebsweise des Ofens hinsichtlich seines Energieverbrauchs.

Zur Bewältigung dieser Aufgabe wurde bereits in Zement, Kalk, Gips 1974, Seiten 513 bis 517, insbesondere S. 517 vorgeschlagen, umlaufend eine Brennergruppe von vorhandenen drei Brennergruppen abzuschalten, um die zentral aufsteigende Kühlluft nacheinander in verschiedene Ofenrandzonen abzudrängen. Nach vorliegenden Untersuchungen hat sich diese Methode jedoch nicht bewährt, vielmehr wurden bei dieser Methode grundsätzlich höhere Rest-$CO_2$-Gehalte beim Brennen von Kalkstein beobachtet im Vergleich zu einer symmetrischen Befeuerung.

Aus US-A-38 87 326 (vgl. insb. Tafel II) ist auch ein Verfahren zum Brennen von Kalkstein bekannt, bei dem eine umlaufende Teilabschaltung einzelner Brenner vorgenommen wird. Diese Teilabschaltung ist jedoch immer mit einer umlaufenden Vollabschaltung einzelner Brenner verbunden. Eine erhöhte gegenüber gleich verteilter Last Beaufschlagung der Brenner unter Vollast ist aus US-A-38 87 326 nicht zu entnehmen.

Überraschenderweise wurde gefunden, dass die gestellte Aufgabe lösbar ist, wenn umlaufend jeweils eine Brennergruppe mit einer um 50 bis 90% verminderten Soll-Leistung betrieben wird, während die übrigen Brennergruppen mit der Minderleistung zusätzlich beaufschlagt werden, wobei die Leistungsumsteuerung auf die benachbarte Brennergruppe nach 3 bis 10 Minuten erfolgt. Nach einer bevorzugten Verfahrensweise werden gemäss der Erfindung 3 bis 6 gleich grosse Brennergruppen in entsprechender Weise gesteuert. Weiterhin hat es sich als vorteilhaft erwiesen, die mit verminderter Soll-Leistung betriebenen Brennergruppen mit einem Luftfaktor $\lambda$ von 0,3 bis 0,8 zu betreiben. Besonders gute Ergebnisse wurden erzielt, wenn die mit verminderter Soll-Leistung betriebenen Brennergruppen mit 30 bis 40% ihrer Soll-Leistung betrieben werden und wenn die einzelnen Brenner innerhalb der Brennergruppen mit gleicher Leistung betrieben werden, beziehungsweise, wenn auch die zusätzlich beaufschlagten Brennergruppen mit gleicher Leistung betrieben werden. Die Verfahrensführung mittels Steuerung gestaltet sich dann einfacher.

Unter Soll-Leistung wird in diesem Zusammenhang die jeweils anteilige Leistung der Brennergruppe verstanden, die erforderlich ist, um den Ofen ausreichend mit Brennenergie zu versorgen. Das bedeutet daher, dass die fehlende Leistung der jeweiligen Brennergruppe von den übrigen Brennergruppen mit erbracht werden muss.

Die Anzahl der Brennergruppen richtet sich nach dem verwendeten Ofentyp, der Brennerfordernissen, zum Beispiel Hartbrand oder Weichbrand, und damit nach dem Kühlluftanfall, welcher seinerseits auch den anzuwendenden Luftfaktor für die mit verminderter Leistung betriebene Gruppe beeinflusst. Für den Normalfall, zum Beispiel Brennern von Weichbrandkalk, empfehlen sich 4 Brennergruppen und die bevorzugten Verfahrensarten.

Die peripher angeordneten Brenner können selbstverständlich auch auf mehrere Brennerebenen am Ofen verteilt sein. Die in der Beschreibung angegebenen Daten für die Minderleistung einer Brennergruppe beziehen sich in diesem Fall auf die Summe der Brennergruppen, die sich bei mehreren Ebenen untereinander befinden. In dem Ausführungsbeispiel ist eine solche Betriebsart eines Ofens mit zwei Brennerebenen beschrieben. Sind beispielsweise drei Brennerebenen vorhanden, so können von den übereinander liegenden vorhanden, so können von den übereinander liegenden Brennergruppen beispielsweise auch zwei voll abgeschaltet werden, während eine voll in Betrieb bleibt. Daraus ergibt sich ein Betrieb des entsprechenden Ofensektors mit einem Drittel seiner zugehörigen Brennergruppen-Soll-Leistung.

Erläuternde Ausführungsbeispiele:

Es wurde ein Kalkschachtofen, Baujahr 1960, mit folgenden Daten und Betriebswerten verwendet:

| | |
|---|---|
| Lichter Schachtdurchmesser | 3,65 m |
| nutzbare Schachthöhe | 24,50 m |
| Rohstein mit $CaCO_3$-Gehalt | 98% |
| Korngrosse | 100 mm bis 140 mm |
| Tagesleistung | 130 bis 160 t Branntkalk |

Brennstoff: Erdgas mit einem Heizwert von 33.000 kJ/m³ Normbd.

| | |
|---|---|
| spezifischer Energiebedarf | 4,4 GJ/t Branntkalk |
| spezifische Feuerraumbelastung | 2,6 kJ/(m² · h) |
| spezifische Querschnittsbelastung | 0,6 t/(m² · h) |
| spezifische Ofenraumbelastung | 0,02 t/(m³ · h) |

Der Ofen ist in ⅓ Höhe vom Austrag her beziehungsweise ⅔ Höhe von der Gicht her mit 2 Ringbrennerebenen ausgerüstet. Jede Ringbrennerebene besteht aus 4 gleichen Brennergruppen.

Beide Ringbrennerebenen sind in weniger als 1 m Abstand übereinander angeordnet und verhalten sich deshalb im praktischen Betrieb wie eine einzige Brennerebene.

Folgende Brennverfahren wurden mehrfach vergleichend und über mehrere Tage ausgedehnt untersucht:

a) Betrieb aller Brennergruppen mit Soll-Leistung (Herkömmliches Verfahren),

b) Betrieb mit umlaufender Vollabschaltung einer Brennergruppe,

c) Betrieb mit umlaufender Minderleistung einer Brennergruppe gemäss der Erfindung.

Im Einzelnen wurden dabei folgende Ergebnisse bei im übrigen gleicher Betriebsweise erhalten.

a) Bei dieser Verfahrensweise wurden, wie zu erwarten, durch die Ausbildung des zentrisch aufsteigenden Kühlluftstromes in der Ofenschachtmitte hohe Rest-$CO_2$-Werte der Kalkstücke festgestellt, während in der Nähe des Ofenmantels überbrannter Kalk auftrat. Der Rest-$CO_2$-Gehalt des produzierten Kalkes betrug 4 bis 5%.

b) Diese Betriebsweise wurde mit verschiedenen Abschaltzeiten, das heisst mit unterschiedlicher Umlauffrequenz der jeweils voll abgeschalteten Brennergruppe erprobt, wobei die übrigen Brennergruppen mit der durch die Vollabschaltung der einen Gruppe entstehenden Minderleistung zusätzlich gleichmässig beaufschlagt wurden. Dabei wurde bei einer Abschaltzeit von 30 Minuten ein durchschnittlicher Rest-$CO_2$-Gehalt von 9% und bei einer Abschaltzeit von 10 Minuten ein Rest-$CO_2$-Gehalt von 6% beobachtet.

c) Bei dieser Verfahrensweise wurde die Brennergruppe mit der verminderten Leistung mit 32% ihrer Soll-Leistung betrieben, das heisst, die beiden übereinander angeordneten Brennergruppen wurden jede für sich auf 32% Soll-Leistung heruntergefahren. Drei verschiedene Zeiträume für den Betrieb mit verminderter Leistung wurden erprobt mit befriedigendem Ergebnis:

Minderleistungszeitraum 10'
Rest-$CO_2$-Geh. 4-4%

Minderleistungszeitraum 5'
Rest-$CO_2$-Geh. 2-3%

Minderleistungszeitraum 3'
Rest-$CO_2$-Geh. 2%
und niedriger

## Patentansprüche

1. Verfahren zum Brennen von karbonatischem Rohstein in einem Schachtofen mit Gas oder Öl als Brennstoff und peripher angeordneten, über den Umfang des Ofens gleichmässig verteilten Brennern, welchen der gesamte erforderliche Brennstoff und die Hauptmenge der Verbrennungsluft zugeführt werden, wobei die Brenner sektorenweise in Gruppen zusammengefasst und die Brennergruppen einzeln steuerbar sind, dadurch gekennzeichnet, dass umlaufend jeweils eine Brennergruppe mit einer um 50 bis 90% verminderten Soll-Leistung betrieben wird, während die übrigen Brennergruppen mit der Minderleistung zusätzlich beaufschlagt werden, wobei die Leistungsumsteuerung auf die benachbarte Brennergruppe nach 3 bis 10 Minuten erfolgt.

2. Verfahren nach Anspruch 1, dadurch gekennzeichnet, dass die Brenner zu 3 bis 6 gleich grossen Brennergruppen zusammengefasst sind und gesteuert werden.

3. Verfahren nach Anspruch 1 oder 2, dadurch gekennzeichnet, dass die Brennergruppe mit verminderter Soll-Leistung mit einem Luftfaktor λ von 0,3 bis 0,8 betrieben wird.

4. Verfahren nach den Ansprüchen 1 bis 3, dadurch gekennzeichnet, dass die Brennergruppe mit verminderter Soll-Leistung mit 30 bis 40% ihrer Soll-Leistung betrieben wird.

5. Verfahren nach den Ansprüchen 1 bis 4, dadurch gekennzeichnet, dass die zusätzlich mit Brennstoff beaufschlagten Brennergruppen mit gleicher Leistung betrieben werden.

## Claims

1. A process for burning carbonaceous stone in a shaft kiln with gas or oil as fuel and burners located peripherally, uniformly distributed around the circumference of the kiln, to which all the necessary fuel and the majority of the combustion air are supplied, whereby the burners are combined in groups in sector fashion and the burner groups are controllable individually, characterized in that one burner group at a time is operated in rotation at nominal power reduced by 50 to 90%, whilst the reduced power ist additionally applied to the other burner groups, power changeover to the adjacent burner group taking place after 3 to 10 minutes.

2. A process according to claim 1, characterized in that the burners are combined to form 3 to 6 equally sized burner groups and are controlled as such.

3. A process according to claim 1 or 2, characterized in that the burner group at reduced nominal power is operated with an air factor $\lambda$ of 0.3 to 0.8.

4. A process according to claims 1 or 3, characterized in that the burner group at reduced nominal power is operated at 30 to 40% of its nominal power.

5. A process according to claims 1 to 4, characterized in that the burner groups to which additional fuel is applied are operated at the same power.

## Revendications

1. Procédé de calcination de pierre brute carbonalée dans un four à cuve avec du gaz ou du fuel comme combustible et des brûleurs uniformément répartis à la périphérie du four, auxquels arrive la totalité du combustible et la majeure partie de l'air de combustion, les brûleurs étant regroupés secteur par secteur, chaque groupe pouvant être commandé individuellement, caractérisé en ce qu'un groupe de brûleurs est en marche en permanence avec une puisance réduite de 50 à 90%, pendant que les autres groupes de brûleurs reçoivent en plus la puissance théorique minimum, la commutation de puissance sur le groupe de brûleurs voisins ayant lieu au bout de 3 à 10 minutes.

2. Procédé selon la revendication 1, caractérisé en ce que les brûleurs sont réunis en trois à six groupes de même taille et commandés.

3. Procédé selon les revendications 1 ou 2, caractérisé en ce que le groupe de brûleurs avec une puissance théorique réduite fonctionne avec un facteur d'air $\lambda$ de 0,3 à 0,8.

4. Procédé selon les revendications 1 à 3, caractérisé en ce que le groupe de brûleurs avec une puissance théorique réduite fonctionne entre 30 et 40% de sa puissance théorique.

5. Procédé selon les revendications 1 à 4, caractérisé en ce que les groupes de brûleurs alimentés en plus avec du combustible fonctionnent à la même puissance.